(19) Europäisches Patentamt

European Patent Office

Office européen des brevets

(11) **EP 2 199 371 A1**

(12) **EUROPEAN PATENT APPLICATION**

(43) Date of publication:
 **23.06.2010 Bulletin 2010/25**

(21) Application number: **08305940.2**

(22) Date of filing: **15.12.2008**

(51) Int Cl.:
 *C10G 45/52* (2006.01)  *C10G 45/04* (2006.01)
 *C10G 45/08* (2006.01)  *C10G 65/08* (2006.01)
 *B01J 21/12* (2006.01)  *B01J 37/04* (2006.01)

(84) Designated Contracting States:
 **AT BE BG CH CY CZ DE DK EE ES FI FR GB GR HR HU IE IS IT LI LT LU LV MC MT NL NO PL PT RO SE SI SK TR**
 Designated Extension States:
 **AL BA MK RS**

(71) Applicants:
 • **Total Raffinage Marketing**
  **92800 Puteaux (FR)**
 • **Albemarle Europe Sprl.**
  **1348 Louvain-la-Neuve (BE)**

(72) Inventors:
 • **Dath, Jean-Pierre**
  **7970, BELOEIL HAINAULT (BE)**

 • **Van Donk, Sander**
  **1180, UCCLE (BE)**
 • **Grasso, Giacomo**
  **1060, BRUXELLES (BE)**
 • **Lodewijk Plantega, Frans**
  **3871JP, HOEVELAKEN (NL)**
 • **Nieman, Jan**
  **3607 CB, MAARSSEN (BE)**

(74) Representative: **Roger, Walter et al**
  **Cabinet Jolly**
  **54, rue de Clichy**
  **75009 Paris (FR)**

(54) **Process for aromatic hydrogenation and cetane value increase of middle distillate feedstocks**

(57)    The instant invention pertains to a process for treating a feed, for example a Light Cycle Oil (LCO), having a high content of S and/or N impurities and/or a high content of aromatics, comprising the following steps, in particular in such an order a step of desulphurisation (HDS) and denitrification (HDN) of a feed, in particular LCO, is passed in presence of hydrogen over a catalyst, containing metals of the group VI B and VIII , leading to an effluent, optionally a step of stripping of the effluent, at least a subsequent step for dearomatization (HDA) in which at least a portion of the effluent, optionally stripped, is passed in presence of hydrogen over a catalyst comprising a combination of platinum and palladium supported on a carrier comprising silica-alumina dispersed in an alumina binder wherein the amount of alumina binder is 5-50 wt. % based on the total weight of the silica-alumina and alumina binder present in the carrier and wherein the silica-alumina comprises 5-50 wt. % of alumina based on the weight of the silica-alumina, and recovering the final load obtained, the use of a specific catalyst and a process for preparing diesel comprising the step of mixing the final effluent obtained by a process of the invention.

**Description**

The invention pertains to a process for increasing the value of a feed, for example middle-distillate feedstock, and more particularly Light Cycle Oil (LCO), in particular by decreasing its aromatic contents and increasing its cetane value, the use of a specific catalyst in such a process and the use of the modified LCO as a part of diesel pool.

Typically, beside the straight-run distillate fraction from the atmospheric distillation column, diesel fuels are prepared by cracking or hydrocracking of high boiling feedstocks, such as vacuum gas oils (VGO) or residues, with the aid of a cracking catalyst or a hydrocracking catalyst, and separating the resulting product into fractions if so required. However, in general, the fraction thus obtained is suitable neither for use as a fuel as such, nor for addition to a "pool". This is, at least partly, because the final fuel has to meet certain specifications, including, in particular, specifications with respect to the aromatics content. Because it is both environmentally advisable and increasingly legally required, it will become even more necessary to reduce the aromatics content of fuels such as diesel oils and kerosene.

Furthermore, there is an increased demand for diesel from certain markets, such as the European market. There is thus a need for alternative sources of diesel fuels and, in particular for processes which are economically interesting and able to increase the value of some petroleum cuts or "byproducts", in which the catalyst(s) is(are) relatively cheap, efficient and/or may be regenerated and/or which lead to good quality products.

One object of the invention is a process for treating a feed, in particular for increasing the value of said feed, more particularly increasing the cetane number/index, decreasing sulphur and/or nitrogen and/or aromatics contents of said feed, said feed being for example a Light Cycle Oil (LCO) from FCC, having a high content of S and/or N impurities and/or a high content of aromatics, comprising the following steps, in particular in such an order:

- a step of desulphurisation (HDS) and denitrification (HDN) of a feed, in particular LCO, is passed in presence of hydrogen over a catalyst, containing metals of the group VI B and VIII , leading to an effluent,
- optionally a step of stripping of the effluent,
- at least a subsequent step for dearomatization (HDA) in which at least a portion of the effluent, optionally stripped, is passed in presence of hydrogen over a catalyst comprising a combination of platinum and palladium supported on a carrier comprising silica-alumina dispersed in an alumina binder wherein the amount of alumina binder is 5-50 wt. % based on the total weight of the silica-alumina and alumina binder present in the carrier and wherein the silica-alumina comprises 5-50 wt. % of alumina based on the weight of the silica-alumina, and
- recovering the final effluent obtained.

The feed may have nitrogen impurities, calculated as N, in particular the N content is more or equal to 100 ppm, specially more or equal to 150 ppm, and more particularly more or equal to 200 ppm. In particular the content of N may be less or equal to 1200 ppm.
The N content may be measured by chemiluminescence using the method referred as ASTM4629.

The feed may also have sulphur impurities, calculated as S, and for example a content of S more or equal to 200 ppm, in particular more or equal to 250 ppm, and more particularly more or equal to 300 ppm.
In particular the content of S may be less or equal to 2.5 wt. %.
The S content may be measured by XRF S using the method referred as ASTM D2622.

The feed may have an aromatic content of more or equal to 50 wt. %, especially more or equal to 55 wt. %, in particular more or equal to 60 wt. %, and more particularly more or equal to 75 wt. %, even more particularly more or equal to 80 wt. %. More particularly, the content of mono- + di-aromatics may be more or equal to 70 wt. %.
The aromatic content may be measured by HPLC_IP391 or UV.

The density at 15°C of the feed may be in the range of 0.85 to 1 g/ml, in particular of 0.90 to 0.97 g/ml.

The feed may have a Cetane Index -CI- (ASTM D4737) of less or equal to 40, in particular less or equal to 35, and more particularly of less or equal to 30.
The feed may have a Cetane Number -CN- (ASTM D613-01) of less or equal to 35, in particular less or equal to 30, and more particularly of less or equal to 25.

The feed is treated by at least one, in particular one, catalyst in order to decrease the S and/or N content.
The HDS/HDN catalyst may contain metals of the group VI B and VIII, which may be supported, in particular on alumina, silica, silica-alumina etc.
More specifically, the catalyst may be NiMo, CoMo or bulk ($NiMoWO_x$) type. The NiMo or CoMo catalysts may be supported, they may especially be of the type $NiMo/Al_2O_3$, $CoMo/Al_2O_3$.
Such catalysts as $NiMo/Al_2O_3$ and $CoMo/Al_2O_3$ are disclosed in EP 1 120 453. Catalysts of ($NiMoWO_x$) type are disclosed for example in EP 1 150 769.
In particular, this HDS and/or HDN catalyst, for example alumina-supported NiMo and CoMo, may be regenerated.

The step of HDS and HDN (also noted HDS/N) may be done with a ratio $H_2$/HC in the range of 100 to 2000 N1/1, in particular of 150 to 600 N1/1, and more specially of 200 to 600 N1/1.

While not wishing to be bound by theory, the inventors believe that a higher $H_2$/HC increases the conversion of S and N compounds contained in the feed and, subsequently, the conversion of the aromatics. However, it means that a higher content of $H_2$ must be employed and that the $H_2$ consumption increases, too.

The ratio of $H_2$ consumption to HC may be in the range of 50 to 600 Nl/l, in particular of 70 to 500 Nl/l, and more specially of 120 to 250 Nl/l.

The Liquid Hourly Space Velocity (LHSV) may be in the range of 0.1 to 5 $h^{-1}$, more specially of 0.3 to 3 $h^{-1}$, and in particular of 0.4 to 1.5 $h^{-1}$.

The temperature of the reaction may be in the range of 200 to 500°C, more specially of 250 to 400°C, and in particular of 320 to 380°C.

The pressure of the reaction may be in the range of 40 to 120 barg, in particular of 45 to 100 barg, and especially of 50 to 90 barg.

The effluent obtained after HDS/N is stripped in order to remove at least a portion, preferably substantially all, of the S and N volatile compounds.

The stripping may be done by conventional methods in use for the separation of $NH_3$ and $H_2S$ from liquid effluents.

The effluent obtained after HDS/N and stripping may have a density at 15°C in the range of 0.87 to 0.92.

The effluent may have an S content of less or equal than 300 ppm, in particular of less or equal than 100 ppm, and more particularly of less or equal than 10 ppm. The S content may be measured by X-Ray Fluorescence, GC-MS for refractory compounds, UV Fluorescence for S <8 ppm

The effluent may have an N content of less or equal than 20 ppm, in particular of less or equal than 10 ppm, and more particularly of less or equal than 5 ppm.

The N content may be measured by chemiluminescence or UOP_269 for basic N.

The aromatic content may be less or equal to 75 wt. %, in particular less or equal to 70 wt. %, and more particularly less or equal to 65 wt. %.

On the other hand, the aromatic content may be more or equal to 45 wt. %, in particular more or equal to 50 wt. %, and more specially more or equal to 55 wt. %.

The content of monoaromatics may be more or equal to 40 wt. %, in particular more or equal to 45 wt. %, and more particularly more or equal to 50 wt. %.

On the other hand, the content of monoaromatics may be less or equal to 75 wt. %, in particular less or equal to 70 wt. %, and more particularly less or equal to 65 wt. %.

The content of polyaromatics, for example di- or triaromatics, may be less or equal than 15 wt. %, in particular less or equal to 5 wt. %.

The Cetane Index may be increased by 5 to 15 units, more particularly by 7 to 12 units. The Cetane Index may be in the range of 20 to 40, and in particular in the range of 25 to 35.

The Cetane Number may be increased by 5 to 15 units, more particularly by 7 to 13 units. The Cetane Number may be in the range of 20 to 38, and in particular in the range of 26 to 36.

The catalyst used in the HDA step comprises a carrier which comprises silica-alumina dispersed in an alumina binder wherein the alumina binder is present in an amount of 5-50 wt. %, based on the total weight of the silica-alumina and the alumina. Preferably, the alumina binder is present in amount of 15-30 wt. %, based on the total weight of the silica-alumina and alumina binder present in the carrier.

The silica-alumina contained in the carrier comprises 5-50 wt. % of alumina, based on the weight of the silica-alumina, preferably 10-40 wt. %, more preferably 15-30 wt. %. If the silica-alumina comprises more than 50 wt. % of alumina, the activity and the stability of the catalyst become insufficient. The total amount of alumina present in the carrier preferably is between 10 and 60 wt. %, more preferably between 25 and 50 wt. %.

The carrier generally contains less than 20 wt. % of components other than silica-alumina and alumina. Such components may comprise titania, silica magnesia, or zirconia. Preferably, the carrier comprises less than 10 wt. %, more preferably less than 5 wt. % of other components and most preferably, the carrier consists essentially of silica-alumina dispersed in the alumina binder.

The term "consisting essentially of" in this context does not exclude these components being present as impurities in small amounts, as long as they do not take away from the performance of the catalyst.

As stated above, the hydrogenation metals present in the HDA catalyst comprise a combination of platinum and palladium. Preferably, the hydrogenation metals consist essentially of a combination of platinum and palladium. Again, the term "consist essentially of" does not exclude hydrogenation metals other than platinum and palladium being present as impurities in small amounts, as long as they do not take away from the performance of the catalyst. Hydrogenation metals in the sense of the present invention are any metals which are able to hydrogenate aromatic compounds under the process conditions given below. Apart from platinum and palladium, typical hydrogenation metals are the Group VIII non-noble metals, e. g. cobalt and nickel, the Group VIB metals, such as molybdenum and tungsten, and the group of rare earth metals.

The total amount of platinum and palladium, calculated as metals on the total weight of the catalyst, present in the catalyst to be used in the process according to the invention generally is between 0.1 and 3 wt. %, preferably between 0.2 and 2 wt. %, more preferably between 0.5 and 2 wt. %. Generally, platinum and palladium will each be present in an amount of 0.05-1.5 wt. %, preferably between 0.1 and 1 wt. %, more preferably between 0.25 and 1 wt. %.

Depending on the feeds to be treated and the process conditions at issue, catalysts containing either 0.25-0.5 wt. % of both platinum and palladium or catalysts containing 0.5-1 wt. % of both platinum and palladium may be preferred.

Preferably, the platinum and the palladium are highly dispersed in the carrier. In the context of the present specification the dispersion is defined as the fraction of metal atoms present at the surface of the metal particles. The dispersion can thus range between 0 % (very large metal particles) and 100 % (very small metal particles). The dispersion preferably is higher than 20 %, more preferably higher than 50 %. It can be determined by various techniques known in the art, e. g., by way of $H_2$ titration as described by Mears and Hansford in J. Catal. 9 (1967) pp.125-134 or by Prelazzi, Cerboni, and Leofanti in J. Catal. 181 (1999) pp. 73-79, assuming that one mole hydrogen ($H_2$) corresponds to 1 mole platinum or palladium.

It is further preferred that the catalyst used in the process of the present invention has a pore volume, measured by water intrusion, of at least 0.6 ml/g.
A preferred catalyst further has a surface area of at least 300 $m^2$/g as determined by way of nitrogen adsorption (BET).

The catalyst can be prepared by processes known in the art. For example, the carrier comprised in the catalyst used in the process of the present invention may be prepared by a process which comprises

(a) mixing silica-alumina with alumina or a precursor thereof, optionally in the presence of a suitable liquid,
(b) shaping the resulting mixture by means of, e.g., extrusion,
(c) drying the shaped material, and
(d) optionally calcining the dried material.

Mixing step (a) may comprise mulling the silica-alumina and the alumina (precursor).

A suitable alumina precursor is boehmite. A suitable liquid that may be applied in mixing step (a) may comprise water, alcohols, such as methanol, ethanol or propanol, ketones, such as acetone, aldehydes, such as propanal, and aromatic liquids, such as toluene. The use of water is preferred, both for reasons of cost and for environmental reasons. Preferably, a peptizing agent is present during mixing step (a). Suitable peptizing agents comprise acidic compounds, such as inorganic acids, e. g., an aqueous solution of hydrogen fluoride, hydrogen bromide, and hydrogen chloride, nitric acid, nitrous acid, and perchloric acid, as well as organic acids, such as acetic acid, propionic acid, and butanoic acid. The amount of peptizing agent preferably is chosen such that it is sufficient to peptize the alumina present in the mixture.

Shaping step (b) may be carried out by suitable methods known in the art, e.g. by way of extrusion, granulation, beading, tablet pressing, pill making, briquetting, etc.

Drying step (c) preferably is performed at a temperature of 0-200°C, more preferably 70-150°C, generally in air. Calcination step (d) preferably is carried out at a temperature of 300-800°C, preferably 450-700°C, generally in air.

Palladium and platinum may be incorporated, e. g., during mixing step (a) by comulling. Alternatively, the metals may be incorporated, e. g., after the drying and/or calcination step by way of impregnation. Impregnation can be done by contacting the carrier with an impregnation solution comprising a soluble salt or complex of platinum and palladium. The impregnation solution may contain additional components which stabilize the solution or influence the distribution of the metals over the carrier. For example, if a homogeneous metal distribution is desired, a strongly acid impregnation solution, such as an impregnation solution containing, as additional components, HCl or $HNO_3$ may be applied.

Suitable palladium compounds for use in an impregnation solution include $H_2PdCl_4$, palladium nitrate, palladium (II) chloride, and complexes thereof. The use of $Pd(NO_3)_2(NH_3)_4$ is preferred. Suitable platinum compounds for use in the impregnation include hexachloroplatinic acid, optionally in the presence of hydrochloric acid, platinum amine hydroxide, and various platinum amine complexes. The latter compounds are considered preferred. The platinum and palladium compounds can be impregnated sequentially or, more preferably, simultaneously.

After the impregnation, the catalyst preferably is dried and/or calcined. Suitable drying conditions include a temperature of 0-200°C, preferably 75-150°C.

Suitable calcination conditions include a temperature of 200-600°C, preferably 350-500°C.

More particularly, the catalysts, A, B or C, used in the HDA step comprise :

|  | A | B | C |
|---|---|---|---|
| alumina binder (wt.% on carrier) | 20 | 20 | 20 |
| silica-alumina (wt.% on carrier) | 80 | 80 | 80 |

(continued)

|  | A | B | C |
|---|---|---|---|
| alumina in silica-alumina (wt.%) | 25 | 25 | 25 |
| Pt (wt.% on catalyst) | 0.56 | 0.7 | 0.35 |
| Pd (wt.% on catalyst) | 0.56 | 0.7 | 0.35 |

More preferably, the catalyst is not crystalline.

The step of HDA may be done with a ratio $H_2$/HC in the range of 500 to 2500 N1/1, in particular of 700 to 2200 N1/1, and more specially of 900 to 1900 N1/1.

The ratio of $H_2$ consumption to HC may be in the range of 100 to 450 N1/1, in particular of 120 to 350 N1/1, and more especially of 150 to 280 N1/1. The Liquid Hourly Space Velocity (LHSV) may be in the range of 0.2 to 2 $h^{-1}$, more specially of 0.3 to 1.5 $h^{-1}$, and In particular of 0.5 to 1.2 $h^{-1}$.

The temperature of the reaction may be in the range of 200 to 500°C, more specially of 250 to 400°C, and in particular of 250 to 320°C.

The pressure of the reaction may be in the range of 35 to 120 barg, in particular of 40 to 90 barg, and especially of 45 to 65 barg.

The effluent obtained after HDS/N, optional stripping and HDA may have a density at 15°C in the range of 0.82 to 0.88 g/ml. The effluent may have a S content of less or equal than 5 ppm, in particular of less or equal than 2 ppm, and more particularly of less or equal than 1 ppm. The effluent may have a N content of less or equal than 5 ppm, in particular of less or equal than 2 ppm, and more particularly of less or equal than 1 ppm.

The aromatic content may be less or equal to 10 wt. %, in particular less or equal to 5 wt. %, and more particularly less or equal to 2 wt. %.

On the other hand, the content of monoaromatics may be less or equal to 10 wt. %, in particular less or equal to 5 wt. %, and more particularly less or equal to 2 wt. %.

The content of polyaromatics, for example di- or tri-aromatics, may be less or equal than 5 wt. %, and more particularly less or equal to 2 wt. %

The Cetane Index may be increased by 5 to 25 units, more particularly by 15 to 25 units compared with the Cetane Index of the starting feed. The Cetane Index may be in the range of 30 to 45, and in particular in the range of 35 to 43. The Cetane Number may be increased by 15 to 28 units, more particularly by 22 to 27 units compared to the Cetane Number of the starting feed. The Cetane Number may be in the range of 35 to 50, and in particular in the range of 40 to 48.

Following an aspect, a subject matter of the invention is the use of a catalyst disclosed above for increasing the cetane number, the cetane index, decreasing the S and/or N impurities and/or decreasing the aromatic content and/or the density of a feed, for example an LCO or an LCO which had been treated with a catalyst for desulphurisation and/or denitrification.

Following another aspect, a subject matter of the invention is a process for preparing diesel, in particular according to European Union rules and directives, as for example Directive 98/70 and its amendments, and/or US specifications (ASTM D975), comprising the step of mixing the final effluent obtained by the process disclosed above with a composition having characteristics of diesel. In particular the composition obtained by the disclosed process is incorporated in an amount of at least 50 wt. %, in particular at least 60 wt. %, and more particularly of at least 70 wt. % compared to the final weight of diesel obtained.

### Example

The feed is an LCO from FCC having the characteristics presented in Table 1.

Table 1

| Density at 15°C (g/ml) | 0,9534 |
|---|---|
| S content (XFRS>9ppm /GO-AED) (ppm) | 526 |
| N content (chemoluminescence) (ppm) | 237 |
| ASTM D86 T10 (°C) | 248.8 |
| ASTM D86 T50 (°C) | 265.5 |
| ASTM D86 T90 (°C) | 284.0 |

(continued)

| | |
|---|---|
| Content of Aromatics (wt. %) | 84.1 |
| Content of Monoaromatics (wt. %) | 18.2 |
| Content of Diaromatics (wt. %) | 65.2 |
| Content of Triaromatics (wt. %) | 0.7 |
| Cetane Index - CI (ASTM D4737) | 16 |
| Cetane Number - CN (ASTM D6113-01) | < 19 |

ASTM D86 TX (°C) means that in the ASTM D86 simulated distillation is the Temperature at which X wt. % of compounds contained in the sample is distillated.

The LCO is treated for desulphurisation and denitrification over a Nickel/Molybdenum alumina-supported catalyst in the conditions disclosed in Table 2.

Table 2

| | |
|---|---|
| $H_2$/HC (N1/1) | 1000 |
| $H_2$ Consumption/HC (N1/1) | 321 |
| LHSV ($h^{-1}$) | 0.5 |
| Temperature (°C) | 320 |
| Pressure (barg) | 55 |
| LHSV = Linear Hourly Space Velocity | |

$$P\ (barg) = P\ bar - Patm\ (\sim 1 bar)$$

The effluent obtained after this step of desulphurisation and denitrification is stripped and thus has the characteristics disclosed in Table 3.

Table 3

| | |
|---|---|
| Density at 15°C (g/ml) | 0.8962 |
| S content (XFRS>9ppm /GO-AED) (ppm) | 0.6 |
| N content (chemiluminescence) (ppm) | < 0.5 |
| ASTM D86 T10 (°C) | 228.5 |
| ASTM D86 T50 (°C) | 246.2 |
| ASTM D86 T90 (°C) | 268.3 |
| Content of Aromatics (wt. %) | 62.5 |
| Content of Monoaromatics (wt. %) | 58.8 |
| Content of Diaromatics (wt. %) | 3.6 |
| Content of Triaromatics (wt. %) | 0.1 |
| Cetane Index - CI (ASTM D4737) | 26 |
| Cetane Number - CN (ASTM D6113-01) | 28 |

Then the effluent is treated by the catalyst used in HDA disclosed in the specification (see above) with the conditions disclosed in Table 4.

Table 4

| H$_2$/HC (NL/L) | 1800 |
|---|---|
| H$_2$ Consumption/HC (NL/L) | 190 |
| LHSV (h$^{-1}$) | 1 |
| Temperature (°C) | 285 |
| Pressure (barg) | 55 |

The resulting final effluent has the characteristics disclosed in Table 5.

Table 5

| Density at 15°C (g/ml) | 0.8527 |
|---|---|
| S content (XFRS>9ppm/GO-AED) (ppm) | < detection limit |
| N content (chemoluminescence) (ppm) | < detection limit |
| ASTM D86 T10 (°C) | 214.6 |
| ASTM D86 T50 (°C) | - |
| ASTM D86 T90 (°C) | 260.3 |
| Content of Aromatics (wt. %) | 1.1 |
| Content of Monoaromatics (wt. %) | 0.8 |
| Content of Diaromatics (wt. %) | 0.3 |
| Content of Triaromatics (wt. %) | < 0.1 |
| Cetane Index - CI (ASTM D4737) | 37 |
| Cetane Number - CN (ASTM D6113-01) | 43.6 |

This results show that the process can increase drastically the value of an LCO feedstock as the CN, CI, density, S and N content and aromatics content values are very close to the value of diesel. Thus the effluents obtained may be incorporated with an important content in the diesel pool.

**Claims**

1. Process for treating a feed, for example a Light Cycle Oil (LCO), having a high content of S and/ or N impurities and/ or a high content of aromatics, comprising the following steps, in particular in such an order:

- a step of desulphurisation (HDS) and denitrification (HDN) of a feed, in particular LCO, is passed in presence of hydrogen over a catalyst, containing metals of the group VI B and VIII , leading to an effluent,
- optionally a step of stripping of the effluent,
- at least a subsequent step for dearomatization (HDA) in which at least a portion of the effluent, optionally stripped, is passed in presence of hydrogen over a catalyst comprising a combination of platinum and palladium supported on a carrier comprising silica-alumina dispersed in an alumina binder wherein the amount of alumina binder is 5-50 wt. % based on the total weight of the silica-alumina and alumina binder present in the carrier and wherein the silica-alumina comprises 5-50 wt. % of alumina based on the weight of the silica-alumina, and
- recovering the final load obtained.

2. Process according to claim 1, **characterized in that** in the HDA catalyst the alumina binder is present in an amount of 15-30 wt. %, based on the total weight of the silica-alumina and alumina binder present in the carrier.

3. Process according to claim 1 or 2, **characterized in that** the carrier contains less than 20 wt. % of components other than silica-alumina and alumina, more particularly less than 10 wt. %, even more preferably less than 5 wt.

% of other components and most preferably, the carrier consists essentially of silica-alumina dispersed in the alumina binder.

4.  Process according to any of claims 1 to 3, **characterized in that** in the HDA catalyst the silica-alumina contained in the carrier comprises 5-50 wt. % of alumina, based on the weight of the silica-alumina, preferably 10-40 wt. %, more preferably 15-30 wt. %, and more particularly the total amount of alumina present in the carrier preferably is between 10 and 60 wt. %, more preferably between 25 and 50 wt. %.

5.  Process according to any of claims 1 to 4, **characterized in that** the hydrogenation metals present in the HDA catalyst comprise, or consist essentially of, a combination of platinum and palladium.

6.  Process according to claim 5, **characterized in that** The total amount of platinum and palladium, calculated as metals on the total weight of the catalyst is between 0.1 and 3 wt. %, preferably between 0.2 and 2 wt. %, more preferably between 0.5 and 2 wt. %.

7.  Process according to claim 5 or 6, **characterized in that** platinum and palladium will each be present in an amount of 0.05-1.5 wt. %, preferably between 0.1 and 1 wt. %, more preferably between 0.25 and 1 wt. %.

8.  Process according to any of claims 5 to 7, **characterized in that** the platinum and the palladium have a dispersion higher than 20%, more preferably higher than 50%.

9.  Process according to any of claims 1 to 8, **characterized in that** the feed has an N content of more or equal to 100 ppm, specially more or equal to 150 ppm, and more particularly more or equal to 200 ppm.

10. Process according to any of claims 1 to 9, **characterized in that** the feed has an S content of more or equal to 200 ppm, in particular more or equal to 250 ppm, and more particularly more or equal to 300 ppm.

11. Process according to any of claims 1 to 10, **characterized in that** the feed has an aromatic content of more or equal to 50 wt. %, especially more or equal to 55 wt. %, in particular more or equal to 60 wt. %, and more particularly more or equal to 75 wt. %, even more particularly more or equal to 80 wt. %.

12. Process according to any of claims 1 to 11, **characterized in that** the feed has a density at 15°C in the range of 0.85 to 1 g/ml, in particular of 0.90 to 0.97 g/ml.

13. Process according to any of claims 1 to 12, **characterized in that** the feed has a Cetane Index -CI- (ASTM D4737) of less or equal to 40, in particular less or equal to 35, and more particularly of less or equal to 30, and/or has a Cetane Number -CN- (ASTM D613-01) of less or equal to 35, in particular less or equal to 30, and more particularly of less or equal to 25.

14. Process according to any of claims 1 to 13, **characterized in that** the catalyst used for decreasing the level of S and N content in the feed is of NiMo, CoMo or bulk (NiMoWO$_x$) type.

15. Process according to any of claims 1 to 14, **characterized in that** the effluent obtained after HDS/N, stripping and HDA has a density at 15°C in the range of 0.82 to 0.88.

16. Process according to any of claims 1 to 15, **characterized in that** the final effluent has an S content of less or equal than 5 ppm, in particular of less or equal than 2 ppm, and more particularly of less or equal than 1 ppm and/or an N content of less or equal than 5 ppm, in particular of less or equal than 2 ppm, and more particularly of less or equal than 1 ppm.

17. Process according to any of claims 1 to 16, **characterized** the aromatic content in the final effluent is less or equal to 10 wt. %, in particular less or equal to 5 wt. %, and more particularly less or equal to 2 wt. %, more particularly the content of monoaromatics is less or equal to 10 wt. %, in particular less or equal to 5 wt. %, and even more particularly the content of polyaromatics, for example di- or tri- aromatics, is less or equal than 5 wt. %, in particular less or equal to 2 wt. %.

18. Process according to any of claims 1 to 17, **characterized in that** the Cetane Index of the final effluent is increased by 5 to 25 units, more particularly by 15 to 25 units compared with the Cetane Index of the starting feed, especially the Cetane Index of the final effluent is in the range of 30 to 45, and in particular in the range of 35 to 43.

19. Process according to any of claims 1 to 18, **characterized in that** the Cetane Number of the final effluent is increased by 15 to 28 units, more particularly by 22 to 27 units compared to the Cetane Number of the starting feed, especially the Cetane Number of the final effluent is in the range of 35 to 50, and in particular in the range of 40 to 48.

20. Use of a catalyst as defined in any of the claims 1 to 19 for increasing the cetane number, the cetane index, decreasing the S and/or N impurities and/or decreasing the density of a feed, for example an LCO or an LCO which had been treated with a catalyst for desulphurisation and/or denitrification.

21. Process for preparing diesel comprising the step of mixing the final effluent obtained by a process as defined in any of claims 1 to 19 with a composition having already characteristics of diesel, in particular the final effluent is incorporated in an amount of at least 50 wt. %, in particular at least 60 wt. %, and more particularly of at least 70 wt. % compared to the final weight of diesel obtained.

Europäisches
Patentamt

European
Patent Office

Office européen
des brevets

# EUROPEAN SEARCH REPORT

**Application Number**

EP 08 30 5940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/102939 A (AKZO NOBEL NV [NL]; ATOFINA RES [BE]; LEVIVELD ROBERTUS GERARDUS [NL];) 27 December 2002 (2002-12-27) * claims; examples * | 1-21 | INV. C10G45/52 C10G45/04 C10G45/08 C10G65/08 B01J21/12 |
| X | US 2002/130063 A1 (VUILLEMOT DANIEL [FR] ET AL) 19 September 2002 (2002-09-19) | 21 | ADD. |
| Y | * claims 14,17,19,20; example 1; table 1 * * page 1, paragraph 1 * * page 3, paragraph 42-45 * * page 4, paragraphs 54,56 * * page 5, paragraphs 59,60 * | 1-20 | B01J37/04 |
| Y | WO 98/35754 A (ENGELHARD CORP [US]; VAARKAMP MARINUS [NL]; REESINK BERNARD HENDRIK [N) 20 August 1998 (1998-08-20) * claims 1,5,9; examples * | 1-20 | |
| A | WO 97/05948 A (SHELL INT RESEARCH [NL]; SHELL CANADA LTD [CA]) 20 February 1997 (1997-02-20) * claims 1,5,9-11,13 * | 1-21 | TECHNICAL FIELDS SEARCHED (IPC) C10G B01J |
| A | US 5 183 556 A (REILLY JAMES W [US] ET AL) 2 February 1993 (1993-02-02) * claim 1 * * column 2, lines 8-20 * | 1-21 | |
| A | US 2002/112989 A1 (SHIH STUART S [US] ET AL) 22 August 2002 (2002-08-22) * claims 1,2,7 * | 1-21 | |

The present search report has been drawn up for all claims

| Place of search | Date of completion of the search | Examiner |
|---|---|---|
| Munich | 7 May 2009 | Harf, Julien |

## ANNEX TO THE EUROPEAN SEARCH REPORT
## ON EUROPEAN PATENT APPLICATION NO.

EP 08 30 5940

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2009

| Patent document cited in search report | | Publication date | Patent family member(s) | | Publication date |
|---|---|---|---|---|---|
| WO 02102939 | A | 27-12-2002 | AT | 294847 T | 15-05-2005 |
| | | | AU | 2002328281 B2 | 26-10-2006 |
| | | | CA | 2449061 A1 | 27-12-2002 |
| | | | DE | 60204027 D1 | 09-06-2005 |
| | | | DE | 60204027 T2 | 02-03-2006 |
| | | | ES | 2242058 T3 | 01-11-2005 |
| | | | JP | 2004535490 T | 25-11-2004 |
| | | | US | 2004181103 A1 | 16-09-2004 |
| US 2002130063 | A1 | 19-09-2002 | DE | 60115372 D1 | 05-01-2006 |
| | | | DE | 60115372 T2 | 06-07-2006 |
| | | | EP | 1217061 A1 | 26-06-2002 |
| | | | ES | 2256187 T3 | 16-07-2006 |
| | | | FR | 2818283 A1 | 21-06-2002 |
| | | | JP | 2002201479 A | 19-07-2002 |
| WO 9835754 | A | 20-08-1998 | AT | 206076 T | 15-10-2001 |
| | | | AU | 6123298 A | 08-09-1998 |
| | | | BR | 9807350 A | 25-04-2000 |
| | | | CA | 2280710 A1 | 20-08-1998 |
| | | | DE | 69801810 D1 | 31-10-2001 |
| | | | DE | 69801810 T2 | 04-04-2002 |
| | | | DK | 964745 T3 | 05-11-2001 |
| | | | EP | 0964745 A1 | 22-12-1999 |
| | | | ES | 2161516 T3 | 01-12-2001 |
| | | | JP | 3959121 B2 | 15-08-2007 |
| | | | JP | 2001512507 T | 21-08-2001 |
| | | | KR | 20000071036 A | 25-11-2000 |
| | | | NO | 993899 A | 12-10-1999 |
| | | | PT | 964745 E | 28-02-2002 |
| WO 9705948 | A | 20-02-1997 | AU | 709482 B2 | 26-08-1999 |
| | | | AU | 6821096 A | 05-03-1997 |
| | | | CA | 2228946 A1 | 20-02-1997 |
| | | | CZ | 9800347 A3 | 15-07-1998 |
| | | | HU | 9802367 A2 | 01-02-1999 |
| | | | JP | 11510731 T | 21-09-1999 |
| | | | NO | 980532 A | 06-02-1998 |
| | | | ZA | 9606661 A | 10-02-1997 |
| US 5183556 | A | 02-02-1993 | CA | 2104295 A1 | 14-09-1992 |
| | | | EP | 0575486 A1 | 29-12-1993 |
| | | | FI | 933982 A | 10-09-1993 |
| | | | JP | 2617158 B2 | 04-06-1997 |
| | | | JP | 6500148 T | 06-01-1994 |
| | | | MX | 9201074 A1 | 01-09-1992 |

For more details about this annex : see Official Journal of the European Patent Office, No. 12/82

**ANNEX TO THE EUROPEAN SEARCH REPORT
ON EUROPEAN PATENT APPLICATION NO.**

EP 08 30 5940

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2009

| Patent document cited in search report | Publication date | Patent family member(s) | Publication date |
|---|---|---|---|
| US 5183556 A | | WO 9216601 A1 | 01-10-1992 |
| US 2002112989 A1 | 22-08-2002 | AU 7060100 A | 19-03-2001 |
| | | WO 0114501 A1 | 01-03-2001 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1120453 A

- EP 1150769 A

**Non-patent literature cited in the description**

- **Mears ; Hansford.** *J. Catal.,* 1967, vol. 9, 125-134

- **Prelazzi ; Cerboni ; Leofanti.** *J. Catal.,* 1999, vol. 181, 73-79